# EUROPÄISCHE PATENTSCHRIFT

(11) **EP 1 022 160 B1**
(45) Veröffentlichungstag und Bekanntmachung des Hinweises auf die Patenterteilung: **17.03.2004**
(21) Anmeldenummer: 99125644.7
(22) Anmeldetag: 22.12.1999
(51) Int. Cl.: B60B 3/14, B60B 3/16, B60B 23/12, B60B 23/06

(54) **Befestigungsscheibe und Radanordnung**
Fastening disc and wheel assembly
Disque de fixation et arrangement de roue

(30) Priorität: 21.01.1999 DE 19902169
(43) Veröffentlichungstag der Anmeldung: 26.07.2000
(73) Patentinhaber: DEERE & COMPANY, Moline, Illinois 61265-8098 (US)
(72) Erfinder: Miller, James Anton, Cedar Falls, Iowa 50613 (US); Drenner, William Llyod, Waterloo, Iowa 50702 (US)
(74) Vertreter: Lau-Loskill, Philipp, Dipl.-Phys.

(56) Entgegenhaltungen:
- EP-A- 0 579 584
- DE-A- 3 442 443
- US-A- 3 869 174

## Beschreibung

Die Erfindung betrifft eine Befestigungsscheibe zur Befestigung eines Gegenstandes an einer drehbaren Welle, wobei die Befestigungsscheibe mehrere zueinander beabstandete Ausnehmungen aufweist, die der Aufnahme von Befestigungselementen dienen, durch welche die Befestigungsscheibe mit der Welle verbindbar ist. Die Erfindung betrifft desweiteren eine Radanordnung zur Befestigung eines Reifens am Nabenbereich einer Fahrzeugachse.

Ackerschlepper werden in letzter Zeit auf immer höheren Transportgeschwindigkeiten ausgelegt. Es wurde beobachtet, daß beim Überschreiten bestimmter Geschwindigkeiten sich Radunwuchten nachteilig auswirken und zum Springen oder Hüpfen des Fahrzeugs führen. Dieser Effekt tritt besonders bei Vorderrädern oder Reifenanordnungen auf, die bezüglich der Achse nicht konzentrisch, sondern außermittig angeordnet sind.

Bei Rädern, die für Automobile entwickelt sind, wird häufig eine Kombination aus konischen Löchern mit konischen Schraubenmuttern verwendet, die auf einem Gewindebohrlochkreis liegen. Ein solches Rad der gattungsgemäßen Art ist z.B. aus der DE 34 42 443 bekannt. Diese Ausbildung erlaubt einerseits den Ausgleich von Toleranzen und ermöglicht dennoch eine Zentrierung des Rades bezüglich der Achse. Die Verwendung von kegelförmigen Löchern ist jedoch bei Radanordnungen ungeeignet, bei denen ein Reversieren (Umdrehen) der Räder möglich sein soll, wie es beispielsweise bei Ackerschleppern gefordert wird, um unterschiedliche Spurweiten einstellen zu können. Da bei einer Anwendung der beschriebenen Ausbildung bei reversierbaren Rädern die Löcher sich zu beiden Seiten kegelförmig öffnen müßten, würde die Felgenscheibe im Bereich der Befestigungsschrauben erheblich geschwächt, so daß lediglich eine dünne Materialschicht zurückbleiben würde. In diesem Fall würde durch das zur Befestigung der Radanordnung aufzubringende Drehmoment die Befestigungsschraube durch die Felgenscheibe durchbrechen.

Alternativ oder zusätzlich zu der Verwendung von kegelförmigen Löchern weisen die Räder von Automobilen häufig ein zentrisches Führungsloch auf, welches mit einem Nabenabschnitt der Achse eine enge Passung bildet. Es ist jedoch in vielen Fällen, beispielsweise bei Fahrzeugen wie Ackerschleppern, unzweckmäßig, solch eng passende Führungslöcher zu verwenden, da diese Fahrzeuge manchmal über längere Zeitabschnitte nicht bewegt werden, so daß die zusammengefügten Teile zusammenrosten können, was es äußerst schwierig macht, die Radanordnung von der Achse zu lösen.

Übliche Vorderradscheiben für Fahrzeuge, wie Ackerschlepper, weisen im allgemeinen eine Anzahl von auf einem Schraubenlochkreis liegende Löchern auf, mittels der die Radanordnung an der Achse, bzw. eine Radscheibe an einer Radfelge, befestigt wird. Die Schrauben haben dabei innerhalb der Löcher ein ausreichendes Spiel, um Lagevariationen der zusammenfügbaren Teile zu ermöglichen. Dabei kann es jedoch leicht passieren, daß die Radanordnung exzentrisch an der Achse befestigt wird, denn es ist nicht wahrscheinlich, daß die Befestigungsschrauben in radialer Richtung und/oder in Umfangsrichtung genau konzentrisch zu den zugehörigen Bohrungen verlaufen.

Die der Erfindung zugrunde liegende Aufgabe wird darin gesehen, eine Befestigungsscheibe der eingangs genannten Art, bzw. die Felgenscheibe einer Radanordnung, derart auszubilden, daß die genannten Probleme überwunden werden. Insbesondere soll die Befestigungsscheibe oder die Felgenscheibe eine genaue Zentrierung eines an ihr befestigten Gegenstands, beispielsweise eines Rades, bezüglich einer Welle oder Achse ermöglichen. Desweiteren soll eine leichte Montage des Gegenstandes oder Rades an der Welle oder der Achse möglich sein.

Die Aufgabe wird erfindungsgemäß durch die Lehren der Patentansprüche 1 oder 9 gelöst. Weitere vorteilhafte Ausgestaltungen und Weiterbildungen der Erfindung gehen aus den Unteransprüchen hervor. Die Lösung bringt die aus der Aufgabenstellung resultierenden Vorteile mit sich.

Erfindungsgemäß weist die eingangs genannte Befestigungsscheibe wenigstens eine Ausnehmung, deren Querschnitt kleiner ist als der der anderen normalen Ausnehmungen, sowie wenigstens eine weitere Ausnehmung, die schlitzförmig ausgebildet ist, auf. Die Längsausrichtung des Schlitzes verläuft im wesentlichen radial in Richtung des Drehmittelpunktes der Befestigungsscheibe. Die Ausnehmung mit dem kleineren Querschnitt und die schlitzförmige Ausnehmung kooperieren derart miteinander, daß sie den zu befestigenden Gegenstand bezüglich der Drehachse zentrieren.

Vorzugsweise sind die Ausnehmung kleineren Durchmessers und die schlitzförmige Ausnehmung als Führungsausnehmungen ausgebildet, deren Querschnitt bzw. Breite derart eng an die verwendeten Befestigungselemente angepaßt sind, daß sich ein vernachlässigbar kleines Spiel (Paßsitz) zwischen Ausnehmung und Befestigungselement ergibt, während die normalen Ausnehmungen eine größere Toleranz mit größerem Spiel (Spielpassung) zulassen. Die schlitzförmige Ausnehmung bildet in Umfangsrichtung der Befestigungsscheibe einen engen Paßsitz und in radialer Richtung der Befestigungsscheibe eine Spielpassung, die einen radialen Ausgleich zuläßt.

Durch diese Ausbildung der Ausnehmung kleineren Durchmessers und der schlitzförmigen Ausnehmung wird die Befestigungsscheibe bezüglich der Welle, auf der sie befestigt wird, automatisch genau zentrieren. Die Ausbildung vermindert daher Exzentrizitäten und Unwuchten. Bei Verwendung dieser Ausbildung an Radanordnungen kann somit ein relativ ruhiger Lauf auch bei erhöhten Geschwindigkeiten erreicht werden.

Es ist vorteilhaft, wenn die Ausnehmung kleineren Querschnitts sich bezüglich der Drehachse im wesentlichen diametral gegenüberliegend zur schlitzförmigen Ausnehmung befindet. Beide Ausnehmungen können beispielsweise um etwa 180° zueinander versetzt angeordnet sein. Bei der Montage einer Radanordnung an der Fahrzeugachse kann bei dieser Ausbildung die Ausnehmung kleineren Durchmessers über einen oberen Befestigungsbolzen geschoben werden. Die Radanordnung hängt dann infolge der Gravitation nach unten, so daß ein Einfädeln eines unteren Befestigungsbolzens in die schlitzförmige Ausnehmung relativ einfach ist.

Die Ausnehmungen sind vorzugsweise im wesentlichen auf wenigstens einem konzentrisch zur Drehachse liegenden Kreis angeordnet. Soll die Befestigungsscheibe einerseits mit einer Welle und andererseits mit einem Gegenstand, beispielsweise einer Radfelge, verbindbar sein, so ist es von besonderem Vorteil, wenn die Ausnehmungen im wesentlichen auf zwei konzentrisch zur Drehachse liegenden Kreisen angeordnet sind. Dabei dienen beispielsweise die radial inneren Ausnehmungen der Zentrierung und Befestigung zwischen Befestigungsscheibe und Welle und die radial äußeren Ausnehmungen der Zentrierung und Befestigung zwischen Befestigungsscheibe und dem Gegenstand. Auf dem inneren Kreis und dem äußeren Kreis sind jeweils eine Ausnehmung kleineren Durchmessers und eine schlitzförmige Ausnehmung angeordnet.

Es ist aus Fertigungsgründen zweckmäßig die normalen, mit Spiel behafteten Ausnehmungen und die Ausnehmung kleineren Durchmessers im wesentlichen zylindrisch auszubilden, so daß sie sich einfach durch Bohren oder Stanzen herstellen lassen. Die Ausnehmung kleineren Querschnitts ist dabei als Führungsloch für ein zylindrisches, schraubenförmiges Befestigungselement ausgebildet und weist einen kleineren Durchmesser auf als die normalen Ausnehmungen.

Einer weiteren bevorzugten Ausbildung der Erfindung zufolge ist die Befestigungsscheibe derart gekröpft ausgebildet, daß sie wenigstens zwei zueinander im wesentlichen parallele, axial zueinander versetzte Flanschringe aufweist. Dabei sind auf einem auf dem inneren Flanschring liegenden Lochkreis erste Ausnehmungen und auf einem auf dem äußeren Flanschring liegenden Lochkreis zweiten Ausnehmungen angeordnet.

Ein bevorzugter Anwendungsbereich der erfindungsgemäßen Befestigungsscheiben sind Radanordnungen für Fahrzeuge, insbesondere für Ackerschlepper, bei denen zur Befestigung eines Reifens am Nabenbereich einer Fahrzeugachse eine Befestigungsscheibe als Felgenscheibe ausgebildet ist. Die Felgenscheibe ist vorzugsweise gekröpft ausgebildet. Bei einer mehrteiligen Radstruktur enthält die Felgenscheibe vorzugsweise Löcher, die auf zwei Kreisen mit unterschiedlichem Radius angeordnet sind und deren Lagen mit entsprechenden Schraubenlochkreisen übereinstimmen. Die auf einem inneren Kreis liegenden Ausnehmungen dienen der Befestigung und Zentrierung der Felgenscheibe an der Radnabe der Fahrzeugachse und die auf einem äußeren Kreis liegende Ausnehmungen dienen der Befestigung und Zentrierung einer Radfelge an der Felgenscheibe.

Die Herstellungskosten einer erfindungsgemäßen Befestigungsscheibe oder Felgenscheibe sind nicht höher als die einer konventionellen Scheibe. Es werden keine zusätzlichen Teile, sondern lediglich ein anderes Stanzwerkzeug benötigt. Mit dem Einsetzen der Schrauben oder Kopfschrauben, zentriert sich die Befestigungsscheibe selbst, wodurch sich eine Radanordnung mit relativ geringem Schlag ergibt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Aufsicht auf eine Radanordnung mit einer erfindungsgemäßen Radscheibe für einen Traktor,
- Fig. 2: die Aufsicht auf eine gemäß einer bevorzugten Ausgestaltung der Erfindung ausgebildeten Radscheibe, welche eine Anordnung von Schraubenlöchern aufweist,
- Fig. 3: den Schnitt durch die Radscheibe entlang der Linie 3 - 3 der Fig. 2 und
- Fig. 4: den Schnitt durch einen Teil der in Fig. 2 dargestellten Radscheibe, welche auf einer Radfelge montiert ist.

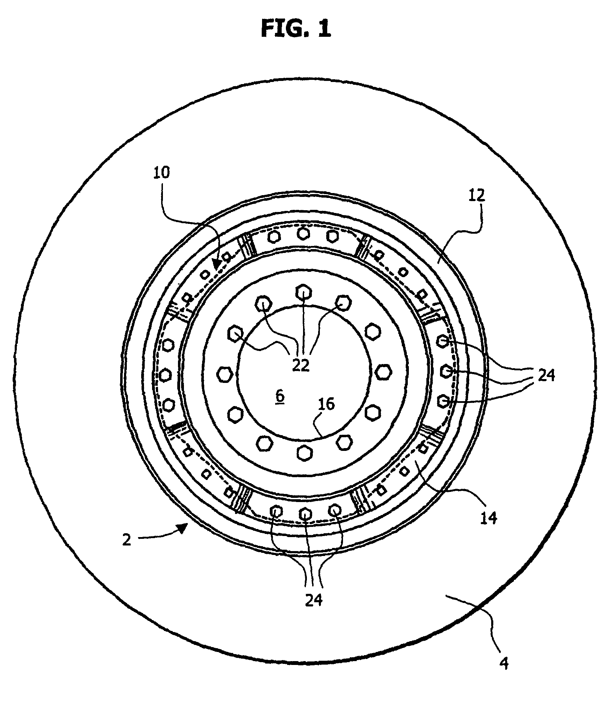

Die in Fig. 1 dargestellte Radanordnung 2 mit Reifen 4 ist auf einem Nabenabschnitt 6, der sich an einem Ende der Achse eines nicht näher gezeigten Fahrzeugs, beispielsweise eines Traktors, befindet, befestigt. Die Radanordnung 2 enthält eine Radscheibe 10 sowie eine Radfelge 12, auf der ein Reifen 4 montiert ist. Die Radfelge 12 enthält ein radial nach innen gerichtetes Flanschstück 14, an dem die Radscheibe 10 festgeschraubt ist.

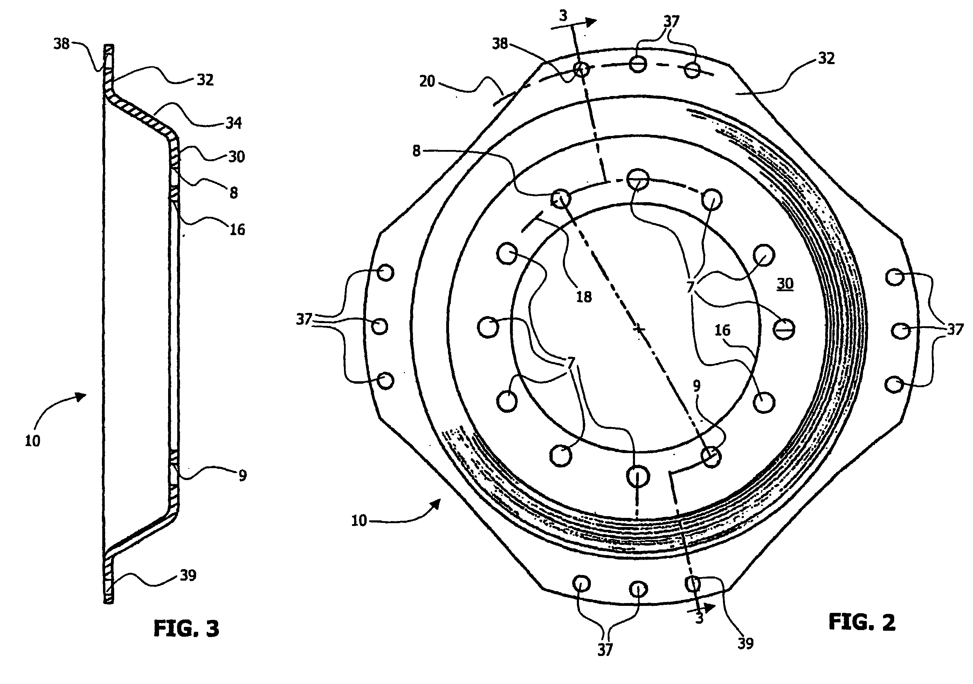

Wie es am besten aus Fig. 2 hervorgeht, enthält die Radscheibe 10 ein Führungsloch 16, in welches der Nabenabschnitt 6 der Achse paßt, sowie mehrere Öffnungen, die beabstandet zueinander auf Kreisen angeordnet sind, welche einem inneren und einem äußeren Schraubenlochkreis 18, 20 entsprechen. Die Öffnungen auf dem inneren Schraubenlochkreis 18 umfassen mehrere normale Löcher (Standardlöcher) 7, sowie ein kleineres Paßsitzloch 8 und einen länglichen Schlitz (Langloch) 9. Die Längsachse des länglichen Schlitzes 9 erstreckt sich radial in Richtung des Mittelpunktes der Radscheibe 10. Sie weist jedoch in Umfangsrichtung des inneren Schraubenlochkreises 18 eine hinsichtlich der verwendeten Kopfschrauben enge Passung auf. In entsprechender Ausbildung umfassen auch die Öffnungen auf dem äußeren Schraubenlochkreis 20 mehrere normale Löcher (Standardlöcher) 37, sowie ein kleineres Paßsitzloch 38 und einen länglichen Schlitz (Langloch) 39. Auch hier erstreckt sich die Längsachse des länglichen Schlitzes 39 radial in Richtung des Mittelpunktes der Radscheibe 10, während der längliche Schlitz in Umfangsrichtung des äußeren Schraubenlochkreises 20 eine enge Passung aufweist.

In die zwölf inneren Öffnungen 7, 8 und 9 sind Kopfschrauben 22 eingesetzt, durch welche die Radscheibe 10 an der Achse befestigt ist. Zwölf weitere Kopfschrauben 24 können durch die äußeren Öffnungen 37, 38 und 39 gesteckt werden, um die Radscheibe 10 an der Radfelge 12 zu befestigen.

Das Flanschstück 14 der Radfelge hat gemäß einer bevorzugten Ausgestaltung der Erfindung zwei unterschiedliche Flanschebenen, die die Einstellung unterschiedlicher Spurweiten erlauben. Das Flanschstück 14 weist zwei Sätze von je zwölf Löchern auf, die sich jeweils in Flanschbereichen befinden, die unterschiedliche axiale Lagen zueinander einnehmen. Die Radanordnung 2 läßt sich somit in verschiedenen axialen Positionen relativ zur Nabe 6 befestigen, so daß sich unterschiedliche seitliche Abstände zwischen den beiden Rädern einer Achse einstellen lassen. Mit jedem Satz von zwölf Löchern können die äußeren Öffnungen 37, 38 und 39 der Radscheibe 10 in Übereinstimmung gebracht werden, um die Radscheibe 10 mit Kopfschrauben 24 zu befestigen.

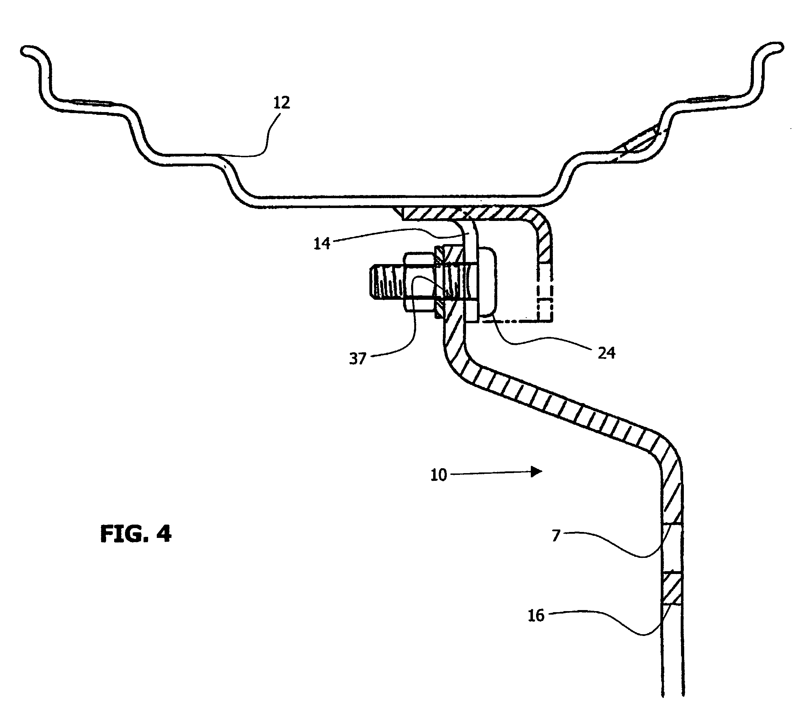

Um einen weiteren, alternativen Radabstand zu ermöglichen, ist das Flanschstück 14 an der Radfelge 12 hinsichtlich der axialen Richtung außermittig befestigt, wie es aus der Schnittdarstellung der Radfelge 12 in Fig. 4 hervorgeht. Durch umgekehrte Montage der Radfelge 12 auf der Radnabe 6 lassen sich somit weitere Variationen der Spurweite einstellen.

Wie aus den Figuren 3 und 4 ersichtlich, weist die Radscheibe 10 einen radial inneren Bereich 30 auf, der von dem radial äußeren Bereichs 32 axial hervorsteht, bzw. zu diesem axial versetzt ist. Die Bereiche 30 und 32 sind über einen konischen Bereich 34 miteinander verbunden. Durch eine umgekehrte Ausrichtung und Montage der Radscheibe 10 auf der Radnabe 6 lassen sich somit unterschiedliche Spurweiten einstellen, indem bei an der Radnabe 6 befestigtem inneren Bereich 30 der äußere Bereich 32 entweder weiter nach außen vorsteht oder zur Achsmitte weist.

Durch die beiden alternativen Flanschebenen der Radfelge 12, den axialen Versatz des Flanschstücks 14 und den axialen Versatz zwischen dem inneren und dem äußeren Bereich 30, 32 der Radscheibe 10 lassen sich für jede Radanordnung 2 acht verschiedene axiale Positionen einstellen, so daß acht unterschiedliche Spurweiten möglich werden. Dabei werden sich entsprechende Radanordnungen 2 auf den sich gegenüberliegenden Nabenabschnitten 6 einer Achse spiegelbildlich montiert.

Nachdem eine gewünschte Spurweite bestimmt ist, lassen sich die Radscheibe 10 und die Radfelge 12 entsprechend miteinander verbinden, um die Radanordnung 2, wie sie aus Fig. 1 hervorgeht, zu vervollständigen. Dabei wird zuerst das Paßsitzloch 38 zu einer Kopfschraube 24 im äußeren Schraubenlochkreis 20 ausgerichtet. Dann wird durch eine zweite durch den länglichen Schlitz 39 gesteckte Kopfschraube 24 die Radscheibe 10 an der Radfelge 12 gegen eine Bewegung in radialer und in Umfangsrichtung festgelegt. Die genaue Lage der übrigen Standardlöcher 37 auf dem äußeren Schraubenlochkreis ergibt sich damit von selbst, so daß durch weitere in die Standardlöcher 20 eingesetzte Kopfschrauben, eine zusätzliche Befestigung der Radscheibe 10 an der Radfelge 12 erfolgen kann.

Die Radanordnung 2 läßt sich auf ähnliche Weise mit dem Nabenabschnitt 6 verbinden, indem zunächst das Paßsitzloch 8 durch eine Kopfschraube 22 auf dem inneren Schraubenlochkreis 18 gesichert und dann der längliche Schlitz 9 mit einer weiteren Kopfschraube 22 gesichert wird. Wegen der radialen und umfangsmäßigen Ausrichtung, die sich durch das Paßsitzloch 8 und den länglichen Schlitz 9 ergibt, zentriert sich die Radanordnung 2 selbst und erlaubt es, daß die Standardlöcher 7 Toleranzen mit größeren Durchmessern aufweisen. Die verbleibenden Standardlöcher 7 befinden sich dann automatisch in der richtigen Position zu den weiteren Kopfschrauben 22.

Wenn sich die Radanordnung 2 während des Betriebs des Fahrzeugs dreht, bleiben die Radanordnung 2 und der Reifen 4 bezüglich der Achse 6 zentriert, so daß radiale Unrundheiten und ein unerwünschtes Hüpfen auf der Straße vermindert werden und somit eine weichere, holperfreiere Fahrt ermöglicht wird.

Auch wenn die Erfindung lediglich anhand eines Ausführungsbeispiels bezüglich einer mehrteiligen, reversierbaren Radanordnung beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann die Erfindung auch bei anderen Anwendungen, bei denen ein Schraubenlochkreis zur Befestigung und Ausrichtung eines um eine Welle rotierenden Bauteils verwendet wird, vorteilhaft sein.

## Patentansprüche

1. Befestigungsscheibe zur Befestigung eines Gegenstandes (12) an einer drehbaren Welle, wobei die Befestigungsscheibe (10) mehrere zueinander beabstandete Ausnehmungen (7, 8, 9, 37, 38, 39) aufweist, die der Aufnahme von Befestigungselementen (22, 24) dienen, durch welche die Befestigungsscheibe (10) mit der Welle verbindbar ist, wobei wenigstens eine Ausnehmung (9, 39) schlitzförmig ausgebildet ist, wobei die Längsausrichtung des Schlitzes im wesentlichen radial in Richtung des Drehmittelpunktes der Befestigungsscheibe (10) verläuft, **dadurch gekennzeichnet, daß** wenigstens eine der weiteren Ausnehmungen (8, 38) einen kleineren Querschnitt aufweist als die anderen normalen Ausnehmungen (7, 37) und daß die Ausnehmung (8, 38) mit dem kleineren Querschnitt und die schlitzförmige Ausnehmung (9, 39) derart miteinander kooperieren, daß sie den Gegenstand (12) bezüglich der Drehachse zentrieren.

2. Befestigungsscheibe nach Anspruch 1, **dadurch gekennzeichnet, daß** die Ausnehmung (8, 38) kleineren Durchmessers und die schlitzförmige Ausnehmung (9, 39) als Führungsausnehmungen ausgebildet sind, deren Querschnitt bzw. Breite derart an die verwendeten Befestigungselemente (22, 24) angepaßt sind, daß sich ein möglichst geringes Spiel zwischen Ausnehmung (8, 38, 9, 39) und Befestigungselement (22, 24) ergibt, während die normalen Ausnehmungen (7, 37) ein größeres Spiel zulassen.

3. Befestigungsscheibe nach Anspruch 1 oder 2, **dadurch gekennzeichnet, daß** die Ausnehmung (8, 38) kleineren Querschnitts sich bezüglich der Drehachse im wesentlichen diametral gegenüberliegend zur schlitzförmigen Ausnehmung (9, 39) befindet.

4. Befestigungsscheibe nach einem der Ansprüche 1 bis 3, **dadurch gekennzeichnet, daß** die Ausnehmungen (7, 8, 9, 37, 38, 39) im wesentlichen auf wenigstens einem konzentrisch zur Drehachse liegenden Kreis (18, 20) angeordnet sind.

5. Befestigungsscheibe nach einem der Ansprüche 1 bis 4, **dadurch gekennzeichnet, daß** die Ausnehmungen (7, 8, 9, 37, 38, 39) im wesentlichen auf zwei konzentrisch zur Drehachse liegenden Kreisen (18, 20) angeordnet sind, die einerseits der Befestigung des Gegenstandes (12) an der Befestigungsscheibe (10) und andererseits der Befestigung der Befestigungsscheibe (10) an der Welle dienen, wobei sich auf jedem Kreis (18, 20) eine Ausnehmung (8, 38) kleineren Durchmessers und eine schlitzförmige Ausnehmung (9, 39) befindet.

6. Befestigungsscheibe nach einem der Ansprüche 1 bis 5, **dadurch gekennzeichnet, daß** die Ausnehmung (8, 38) kleineren Querschnitts und die schlitzförmige Ausnehmung (9, 39) bezüglich der Drehachse zueinander in etwa um 180° versetzt angeordnet sind.

7. Befestigungsscheibe nach einem der Ansprüche 1 bis 6, **dadurch gekennzeichnet, daß** die normalen Ausnehmungen (7, 37) und die Ausnehmung (8, 38) kleineren Durchmessers im wesentlichen zylindrisch ausgebildet sind, wobei die Ausnehmung (8, 38) kleineren Querschnitts als Führungsloch für schraubenförmige Befestigungselemente (22, 24) ausgebildet ist und einen kleineren Durchmesser aufweist als die normalen Ausnehmungen (7, 37).

8. Befestigungsscheibe nach einem der Ansprüche 1 bis 7, **dadurch gekennzeichnet, daß** die Befestigungsscheibe (10) derart gekröpft ausgebildet ist, daß sie wenigstens zwei zueinander im wesentlichen parallele, axial zueinander versetzte Flanschringe (30, 32) aufweist, wobei auf einem auf dem inneren Flanschring (30) liegenden Kreis (18) erste Ausnehmungen (7, 8, 9) und auf einem auf dem äußeren Flanschring (32) liegenden Kreis (20) zweiten Ausnehmungen (37, 38, 39) angeordnet sind.

9. Radanordnung zur Befestigung eines Reifens am Nabenbereich (6) einer Fahrzeugachse mit einer als Befestigungsscheibe ausgebildeten Felgenscheibe (10), die gemäß eines der Ansprüche 1 bis 8 ausgebildet ist.

10. Radanordnung nach Anspruch 9, **dadurch gekennzeichnet, daß** auf einem inneren Kreis (18) liegende Ausnehmungen (7, 8, 9) der Befestigung der Felgenscheibe (10) an der Radnabe (6) der Fahrzeugachse dienen und daß auf einem äußeren Kreis (20) liegende Ausnehmungen (37, 38, 39) der Befestigung einer Radfelge (12) an der Felgenscheibe (10) dienen.

## Claims

1. A mounting disc for fixing an article (12) on a rotatable shaft, wherein the mounting disc (10) has a plurality of recesses (7, 8, 9, 37, 38, 39) spaced from one another which serve to receive fixing elements (22, 24), through which the mounting disc (10) can be attached to the shaft, wherein at least one recess (9, 39) is of slot form, wherein the longitudinal alignment of the slot runs substantially radially in the direction of the centre of rotation of the mounting disc (10), **characterized in that** at least one of the further recesses (8, 38) has a smaller cross-section than the other, normal recesses (7, 37) and **in that** the recess (8, 38) with the smaller cross-section and the slot form recess (9, 39) so cooperate with one another that they centre the article (12) relative to the axis of rotation.

2. A mounting disc according to claim 1, **characterized in that** the recess (8, 38) of smaller diameter and the slot form recess (9, 39) are formed as guide recesses, whose cross-section or width is so matched to the fixing elements (22, 24) which are used that in the smallest possible play between recess (8, 38, 9, 39) and fixing element (22, 24) results , while the normal recesses (7, 37) permit greater play.

3. A mounting disc according to claim 1 or 2, **characterized in that** the recess (8, 38) of smaller cross-section is located diametrically opposite the slot form recess (9, 39) in relation to the axis of rotation.

4. A mounting disc according to any of claims 1 to 3, **characterized in that** the recesses (7, 8, 9, 37, 38, 39) are arranged substantially on at least one circle (18, 20) lying concentrically about the axis of rotation.

5. A mounting disc according to any of claims 1 to 4, **characterized in that** the recesses (7, 8, 9, 37, 38, 39) are arranged substantially in two circles (18, 20) lying concentrically about the axis of rotation, which serve on the one hand for fixing the article (12) on the mounting disc (10) and on the other hand for fixing the mounting disc (10) on the shaft, wherein a recess (8, 38) of smaller diameter and a slot form recess (9, 39) are located in each circle (18, 20).

6. A mounting disc according to any of claims 1 to 5, **characterized in that** the recess (8, 38) of smaller cross-section and the slot form recess (9, 39) are offset from one another by about 180 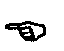 in relation to the axis of rotation.

7. A mounting disc according to any of claims 1 to 6, **characterized in that** the normal recesses (7, 37) and the recess (8, 38) of smaller diameter are of substantially cylindrical form, while the recess (8, 38) of smaller cross-section is formed as a guide hole for fixing elements (22, 24) of screw form and has a smaller diameter than the normal recesses (7, 37).

8. A mounting disc according to any of claims 1 to 7, **characterized in that** the mounting disc (10) is so dished that it comprises at least two substantially parallel flange rings (30, 32) axially offset from one another, wherein first recesses (7, 8, 9) are arranged in a circle (18) lying in the inner flange ring (30) and second recesses (37, 38, 39) are arranged in a circle (20) lying in the outer flange ring (32).

9. A wheel arrangement for fixing a tyre on the hub region (6) of a vehicle axle, with a rim disc (10) formed as a mounting disc, which is formed in accordance with the any of claims 1 to 8.

10. A wheel arrangement according to claim 9, **characterized in that** recesses (7, 8, 9) lying on an inner circle (18) serve to fix the rim disc (10) on the wheel hub (6) of the vehicle axle and **in that** recesses (37, 38, 39) lying on an outer circle (20) serve to fix a wheel rim (12) on the rim disc (10).

## Revendications

1. Disque de fixation pour la fixation d'un objet (12) sur un arbre rotatif, dans- lequel le disque de fixation (10) présente plusieurs évidements (7, 8, 9, 37, 38, 39) espacés l'un de l'autre, qui sont destinés à recevoir des éléments de fixation (22, 24) par lesquels le disque de fixation (10) peut être assemblé à l'arbre, dans lequel au moins un évidement (9, 39) présente une forme de fente, dans lequel l'orientation longitudinale de la fente est sensiblement radiale en direction du centre de rotation du disque de fixation (10), **caractérisé en ce qu'**au moins un des autres évidements (8, 38) présente une section transversale plus petite que les autres évidements normaux (7, 37) et **en ce que** l'évidement (8, 38) avec la section transversale plus petite et l'évidement en forme de fente (9, 39) coopèrent l'un avec l'autre de telle façon qu'ils centrent l'objet (12) par rapport à l'axe de rotation.

2. Disque de fixation selon la revendication 1, **caractérisé en ce que** l'évidement (8, 38) de plus petit diamètre et l'évidement en forme de fente (9, 39) se présentent sous la forme d'évidements de guidage, dont la section transversale respectivement la largeur sont adaptées aux éléments de fixation utilisés (22, 24) de telle façon qu'il en résulte un jeu aussi faible que possible entre l'évidement (8, 38, 9, 39) et l'élément de fixation (22, 24), tandis que les évidements normaux ((7, 37) admettent un jeu plus grand.

3. Disque de fixation selon la revendication 1 ou 2, **caractérisé en ce que** l'évidement (8, 38) de plus petite section transversale se trouve en position sensiblement diamétralement opposée à l'évidement en forme de fente (9, 39) par rapport à l'axe de rotation.

4. Disque de fixation selon l'une quelconque des revendications 1 à 3, **caractérisé en ce que** les évidements (7, 8, 9, 37, 38, 39) sont disposés essentiellement sur au moins un cercle (18, 20) concentrique à l'axe de rotation.

5. Disque de fixation selon l'une quelconque de revendications 1 à 4, **caractérisé en ce que** les évidements (7, 8, 9, 37, 38, 39) sont disposés essentiellement sur deux cercles (18, 20) concentriques à l'axe de rotation, qui servent d'une part pour la fixation de l'objet (12) sur le disque de fixation (10) et d'autre part pour la fixation du disque de fixation (10) sur l'arbre, dans lequel il se trouve un évidement (8, 38) de plus petit diamètre et un évidement en forme de fente (9, 39) sur chaque cercle (18, 20).

6. Disque de fixation selon l'une quelconque des revendications 1 à 5, **caractérisé en ce que** l'évidement (8, 38) de plus petite section transversale et l'évidement en forme de fente (9, 39) sont décalés d'environ 180° l'un par rapport à l'autre par rapport à l'axe de rotation.

7. Disque de fixation selon l'une quelconque des revendications 1 à 6, **caractérisé en ce que** les évidements normaux (7, 37) et l'évidement (8, 38) de plus petit diamètre sont de forme essentiellement cylindrique, dans lequel l'évidement (8, 38) de plus petite section transversale se présente sous la forme d'un trou de guidage pour des éléments de fixation en forme de vis (22, 24) et présente un plus petit diamètre que les évidements normaux (7, 37).

8. Disque de fixation selon l'une quelconque des revendications 1 à 7, **caractérisé en ce que** le disque de fixation (10) est coudé de telle façon qu'il présente au moins deux anneaux de bride (30, 32) sensiblement parallèles l'un à l'autre, décalés axialement l'un par rapport à l'autre, dans lequel des premiers évidements (7, 8, 9) sont disposés sur un cercle (18) situé sur l'anneau de bride intérieur (30) et des deuxièmes évidements (37, 38, 39) sont disposés sur un cercle (20) situé sur l'anneau de bride extérieur (32).

9. Arrangement de roue pour la fixation d'un pneu sur la région du moyeu (6) d'un essieu de véhicule avec un disque de jante (10) ayant la forme d'un disque de fixation, qui est réalisé selon l'une quelconque des revendications 1 à 8.

10. Arrangement de roue selon la revendication 9, **caractérisé en ce que** des évidements (7, 8, 9) situés sur un cercle intérieur (18) servent pour la fixation du disque de jante (10) sur le moyeu de roue (6) de l'essieu de véhicule et **en ce que** des évidements (37, 38, 39) situés sur un cercle extérieur (20) servent pour la fixation d'une jante de roue (12) sur le disque de jante (10).
